# FASCICULE DE BREVET EUROPEEN

(11) **EP 1 066 557 B1**
(45) Date de publication et mention de la délivrance du brevet: **02.05.2003**
(21) Numéro de dépôt: 00901700.5
(22) Date de dépôt: 02.02.2000
(51) Int. Cl.: G06F 7/50

(54) **ADDITIONNEUR COMPLET ECL CHAINABLE RAPIDE AVEC DES ENTREES DIFFERENTIELLES**
SCHNELLER VERKETTENBARER VOLLADDIERER MIT DIFFERENTIELLEN EINGÄNGEN
FAST-CHAINABLE ECL FULL ADDER WITH DIFFERENTIAL INPUTS

(30) Priorité: 02.02.1999 FR 9901179
(43) Date de publication de la demande: 10.01.2001
(73) Titulaire: Atmel Grenoble S.A., 38120 Saint Egreve (FR)
(72) Inventeur: SIMONY, Laurent, 94117 Arcueil Cedex (FR); LE TUAL, Stéphane, 94117 Arcueil Cedex (FR); WINGENDER, Marc, 94117 Arcueil Cedex (FR)
(74) Mandataire: Guérin, Michel
(86) Numéro de dépôt international: FR0000242
(87) Numéro de publication internationale: WO00046663

(56) Documents cités:
- US-A- 4 133 040
- US-A- 4 916 653

## Description

L'invention concerne un additionneur chaînable élémentaire, fonctionnant à des fréquences élevées, effectuant une sommation binaire de deux bits d'entrée A et B et d'une entrée retenue C.

La somme binaire pouvant varier entre 00 et 11, l'additionneur comporte une sortie poids faible SO et une sortie poids fort CO (ou sortie retenue).

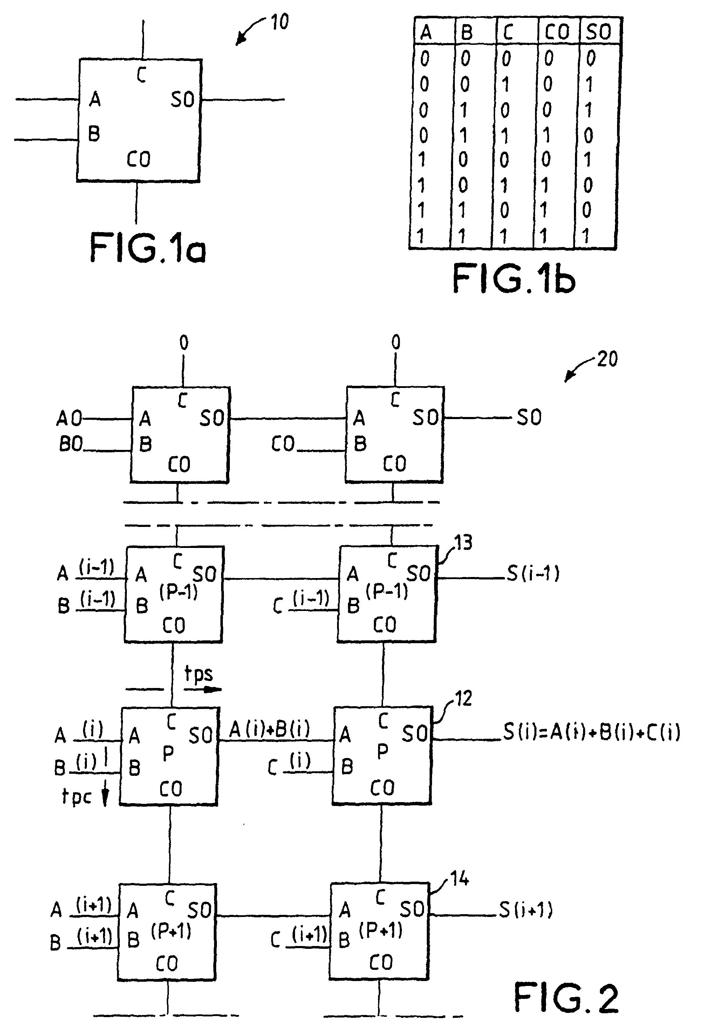

La table de vérité d'un additionneur chaînable élémentaire 10, représenté schématiquement à la figure 1a, est donnée par le tableau de la figure 1b montrant tous les états binaires possibles des bits d'entrée A, B, C et les états correspondants des sorties poids faible SO et poids fort CO.

L'additionneur chaînable élémentaire 10 constitue une brique de base pour la réalisation d'additionneurs pouvant sommer M mots de N bits, M étant un nombre entier supérieur ou égal à 2.

La figure 2 montre une architecture typique 20 d'un tel additionneur comportant des additionneurs chaînables élémentaires 10.

Un additionneur élémentaire 12 traitant les bits A(i), B(i), C(i) de poids p, avec i=0,1,2,...N-1, reçoit son entrée retenue C de la sortie retenue CO de l'additionneur élémentaire 13 traitant les bits de poids (p-1), sa propre sortie CO attaquant l'entrée retenue C de l'additionneur élémentaire 14 traitant les bits de poids (p+1). Les entrées A et B de l'additionneur élémentaire peuvent servir directement d'entrée à un autre additionneur de même type. Cette notion de chaînabilité suppose une compatibilité des niveaux d'entrée et de sortie.

Soit tps le temps de propagation entre les entrées A ou B, et la sortie poids faible SO et soit tpc le temps de propagation entre les entrées A ou B, et la sortie retenue CO d'un additionneur chaînable élémentaire. Pour la somme de deux mots de N bits, il faut un temps total égal à N.tpc+tps. Ainsi le temps de propagation de la structure complète dépend de tpc.

Les critères de performances recherchées pour un module additionneur à réaliser en technologie des circuits intégrés sont principalement :
- temps de propagation
- consommation
- circuit fonctionnant avec des tensions d'alimentation à partir de 2,7 volts. La tension maximum est fixée par la tenue en tension de la technologie utilisée.
- chaînabilité
- sortie SO positionnée avant la retenue CO (soit tpc<tps)
- faible surface sur silicium

Actuellement on trouve différents types d'additionneurs. Les additionneurs CMOS qui présentent une très forte densité d'intégration et une faible consommation. Ces types de circuits CMOS présentent un temps de propagation trop important pour des applications nécessitant un calcul rapide. L'utilisation de la technologie ECL plus rapide comporte les inconvénients d'une consommation élevée et une surface de réalisation importante. Une telle technique est par example décrite dans la publication US-A-4 916 653.

Afin de pallier les inconvénients de l'art antérieur, l'invention propose un additionneur chaînable recevant trois bits A, B, C pour fournir deux sorties sommes complémentaires et deux sorties retenues complémentaires comprenant :
- un premier étage ayant trois paires différentielles P1, P2, P3 recevant chacune un bit respectif A, B, C et son complément A*, B*, C*, les trois paires ayant des branches de sortie communes et étant alimentées chacune par un courant identique I, les branches de sortie comprenant chacune trois résistances R1, R2, R3 et R4, R5, R6 en série connectées à un potentiel de référence, ces résistances définissant trois noeuds intermédiaires A1, A2, A3 dans la première branche, B1, B2, B3 dans la deuxième branche, lesdits noeuds intermédiaires étant formés par les points de connexion entre lesdites résistances et les sorties des paires différentielles, lesdites sorties retenues étant prises sur les noeuds A2 et B2,
- un deuxième étage comprenant trois autres paires différentielles P4, P5, P6 dont les entrées sont reliées aux noeuds A1 et B3 pour la paire P4, A2 et B2 pour la paire P5 et A3 et B1 pour la paire P6, les paires P4 et P6 ayant chacune une branche commune avec la paire P5 et une branche non commune, les sorties sommes de l'étage additionneur étant constituées chacune par la combinaison, selon une fonction « ou », des états logiques apparaissant respectivement sur la branche non commune de l'une des paires P4 et P6 et sur la branche commune de l'autre.

D'autres modes de réalisation de l'invention sont spécifiés dans les revendications dépendantes attenantes.

La structure originale de l'additionneur selon l'invention, comporte l'avantage de réduire au minimum le nombre des couches logiques nécessaires à l'addition. En effet la sortie poids faible est obtenue en deux couches logiques et la sortie retenue est stabilisée avant la sortie poids faible en une seule couche, ce qui réduit notablement les temps de propagation de l'additionneur par rapport aux additionneurs de l'art antérieur.

Par couche logique on entend ici les étages élémentaires qui utilisent l'effet amplificateur du transistor (entre sa base et son collecteur) pour passer de l'entrée à la sortie. Ceci par opposition aux effets de type « suiveur » également utilisés ici, qui sont beaucoup plus rapides que les effets amplificateurs, donc négligeables face à ces derniers en termes de temps de propagation.

D'autres avantages de cette structure résident dans la minimisation du nombre de composant utilisés et la réduction de la consommation.

Dans ce qui suit, le complément logique est indiqué par un astérisque; sur les dessins il est classiquement représenté par une barre surmontant le nom du signal.

L'invention sera mieux comprise à la lecture de la description détaillée qui en est faite en référence aux dessins annexés dans lesquels :
- les figures 1a et 1b déjà décrites représentent respectivement un additionneur chaînable élémentaire de l'art antérieur, et sa table de vérité.
- la figure 2, déjà décrite, montre une architecture typique d'un additionneur pouvant sommer M mots de N bits, comportant les additionneurs chaînables élémentaires de la figure 1a.
- la figure 3, montre une réalisation, selon l'invention, d'un étage additionneur chaînable élémentaire.
- la figure 4 montre un tableau des niveaux et d'états du premier étage de l'additionneur de la figure 3.
- la figure 5 montre un tableau d'états du deuxième étage de l'additionneur de la figure 3.
- la figure 6 montre un tableau de résultats de l'additionneur de la figure 3.

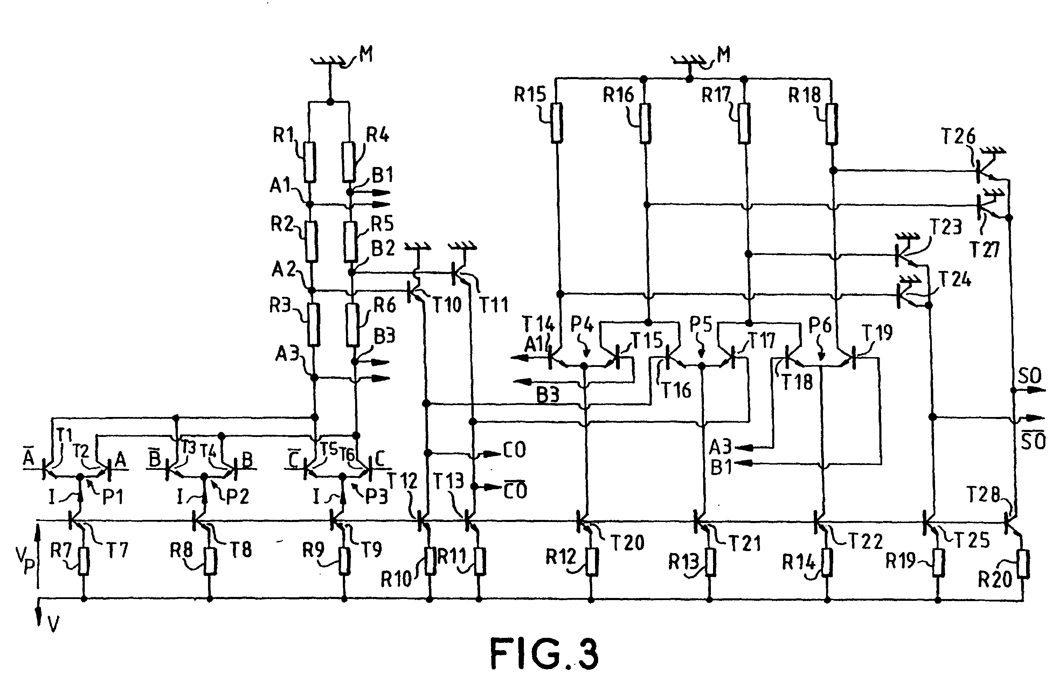

La figure 3 montre un additionneur chaînable élémentaire selon l'invention, réalisé à partir de transistors de type NPN. L'additionneur comporte un premier étage, ayant trois paires différentielles P1, P2, P3, générant deux sorties retenues complémentaires CO et CO* et un deuxième étage, ayant trois autres paires différentielles P4, P5, P6, générant deux sorties sommes complémentaires SO et SO*.

L'additionneur est alimenté par un potentiel V par rapport à un potentiel de référence représenté par une masse M de l'additionneur. Un tension de polarisation Vp par rapport au potentiel V d'alimentation assure la polarisation des bases de transistors générateurs de courant utilisés dans l'additionneur. Dans cette réalisation le potentiel d'alimentation est de -5 volts et le potentiel de polarisation des générateurs de courant est de 1,2 volts par rapport au potentiel d'alimentation de -5 volts, soit de -3,8 volts.

En réalité, cette valeur de 1,2 volts est approximative. En effet, ce sont les courants que l'on doit contrôler dans cette structure. Le potentiel de polarisation sera choisi tel que les générateurs (ou sources) de courant utiles aient les valeurs nominales souhaitées.

Chaque paire P1, P2, P3 du premier étage de l'additionneur est constituée de deux transistors T1 et T2 pour la paire P1, T3 et T4 pour la paire P2, T5 et T6 pour la paire P3. Les bases des transistors de chaque paire P1, P2, P3 reçoivent respectivement un bit A, B, C pour l'un des transistors de chaque paire et son complément A*, B*, C* pour l'autre transistor.

Les émetteurs reliés entre eux de chaque paire différentielle du premier étage sont connectés respectivement aux collecteurs des transistors T7, T8 et T9 fonctionnant en générateurs de courant, imposant un courant I dans chaque paire différentielle, les transistors T7,T8 et T9 étant connectés respectivement par leurs émetteurs au potentiel négatif V par l'intermédiaire des résistances R7, R8 et R9, et par leurs bases à un potentiel de polarisation Vp égal à 1,2 volts.

C'est pour une question de précision des courants que l'on insère une résistance (R7, R8, R9) entre l'émetteur du transistor (T7, T8, T9) et l'alimentation négative (-5 volts). Cette résistance s'appelle résistance de dégénérescence et la tension à ses bornes s'appelle la tension de dégénérescence. Dans le cas de la réalisation de la figure 3, on a :
Vbe + tension de dégénérescence, égale à environ 1,2 volt.
avec Vbe = tension base émetteur des transistors T7, T8 et T9,
Donc la tension de dégénérescence est égale à environ 0,5 volt. Cette tension de dégénérescence aurait pu être rendue nulle au prix d'un contrôle des courants moins précis. On pourrait donc réduire cette tension de polarisation (de 1,2 volt) et gagner encore sur la tension d'alimentation minimale.

Les collecteurs des transistors attaqués par les bits complémentaires A*, B*, C* sont connectés entre eux à une extrémité d'une première branche comportant trois résistances R1, R2 et R3 en série, l'autre extrémité de la première branche étant relié à la masse M de l'additionneur. De la même façon, les collecteurs des transistors attaqués par les bits A, B, C sont connectés entre eux à une extrémité d'une seconde branche comportant trois autres résistances R4, R5 et R6 en série, l'autre extrémité de la branche étant reliée à la masse M de l'additionneur.

Dans la première branche, les trois résistances R1, R2 et R3 connectées en série, définissent trois noeuds intermédiaires, un noeud A1 au point de connexion des résistances R1 et R2, un noeud A2 au point de connexion des résistances R2 et R3, et un noeud A3 au point de connexion de la résistance R3 et les collecteurs des transistors T1, T3 et T5, attaqués par les bits complémentaires A*, B*, C* et dans la seconde branche, les trois autres résistances R4, R5 et R6 connectées en série, définissant trois autres noeuds intermédiaires, un noeud B1 au point de connexion des résistances R4 et R5, un noeud B2 au point de connexion des résistances R5 et R6, et un noeud B3 au point de connexion de la résistance R6 et les collecteurs des transistors T2, T4 et T6 attaqués par les bits A, B, C.

Les sorties retenues CO et CO* sont prises sur les noeuds A2 et B2 à travers les jonctions base émetteur d'un transistor suiveur T10 pour la sortie retenue CO et d'un autre transistor suiveur T11 pour la sortie retenue complémentaire CO*, l'un et l'autre transistors suiveurs T10 et T11 étant reliés par leurs collecteurs à la masse M, et par leurs metteurs respectivement aux collecteurs de transistors T12 et T13 montés en générateurs de courant, les transistors T12 et T13 étant reliés par leurs émetteurs au potentiel négatif V, respectivement par l'intermédiaire des résistances R10 et R11, leurs bases étant connectées au potentiel de polarisation Vp.

Les trois autres paires différentielles P4, P5, P6 du deuxième étage de l'additionneur sont reliées au noeuds A1, A2, A3 et B1, B2, B3 du premier étage à fin de constituer les sorties sommes complémentaires SO et SO*

La paire P4 comporte deux transistors T14 et T15, dont les bases sont respectivement reliées aux noeuds A1 et B3, la paire P5 comportant deux transistors T16 et T17 dont les bases sont respectivement reliées aux noeuds A2 et B2 à travers les jonctions base émetteur des transistors suiveurs T10 et T11, la paire P6 comportant deux transistors T18 et T19 dont les bases sont reliées respectivement aux noeuds A3 et B1.

Les émetteurs reliés entre eux des transistors de chaque paire différentielle P4, P5, P6 du deuxième étage sont connectées respectivement aux collecteurs de transistors T20, T21 et T22 fonctionnant en générateurs de courant, imposant un même courant dans chacune des paires différentielles P4, P5 et P6, les transistors T20, T21 et T22 étant connectés par leurs émetteurs au potentiel négatif V, respectivement par l'intermédiaire de résistances de dégénérescence R12, R13 et R14, et par leurs bases au potentiel de polarisation Vp.

Les paires P4 et P6 ont chacune une branche commune avec la paire P5 et une branche non commune.

Le transistor T14 de la branche non commune de la paire P4 se trouve connecté par son collecteur à la masse M à travers une résistance R15, les collecteurs des transistors T15 et T16 de la branche commune des paires P4 et P5 étant reliés entre eux et étant reliés à la masse M par l'intermédiaire d'une résistance de charge commune R16.

D'une façon symétrique, les collecteurs des transistors T17 et T18 de la branche commune des paires différentielles P5 et P6 sont reliés entre eux et étant reliés à la masse M par l'intermédiaire d'une résistance de charge commune R17. Le transistor T19 de la branche non commune de la paire différentielle P6, se trouve connecté par son collecteur à la masse M à travers une résistance R18

Les sorties sommes SO et SO* de l'étage additionneur fournissent des états logiques qui sont constitués par une combinaison, selon une fonction « ou », des états logiques apparaissant sur la branche non commune de l'une des paires P4 et P6 et sur la branche commune de l'autre.

Pour la sortie SO on combine selon une fonction « ou » l'état logique présent sur les collecteurs des transistors T15, T16 (branche commune à P4 et P5) et l'état logique présent sur le collecteur du transistor T19 (branche non commune de P6).

Symétriquement pour la sortie SO* on combine les états logiques présents sur les collecteurs de T14 et de T17, T18.

Pour la sortie SO*, on utilise des transistors T23 et T24 dont les collecteurs sont reliés à la masse M et les émetteurs reliés entre eux et au collecteur d'un transistor T25 monté en générateur de courant, le transistor T25 étant relié par son émetteur au potentiel négatif V par l'intermédiaire d'une résistance R19, sa base étant reliée au potentiel de polarisation Vp.

La base du transistor T24 est reliée au collecteur du transistor T14 de la branche non commune de la paire P4, la base du transistor T23 étant reliée aux collecteurs des transistors T17, T18 de la branche commune des paires P5 et P6.

Pour la sortie SO, on utilise des transistors T26 et T27 dont les collecteurs sont reliés à la masse M et les émetteurs reliés entre eux et au collecteur d'un transistor T28 monté en générateur de courant, le transistor T28 étant relié par son émetteur au potentiel négatif V par l'intermédiaire d'une résistance R20, et par sa base au potentiel de polarisation Vp.

La base du transistor T26 est reliée au collecteur du transistor T19 de la branche non commune de la paire P6, la base du transistor T27 étant reliée aux collecteurs des transistors T15, T16 de la branche commune des paires P4 et P5.

Les sorties sommes SO et SO* de l'additionneur s'effectuent respectivement sur les émetteurs de transistors T26 et T27 et sur les émetteurs des transistors T23 et T24.

Nous allons par la suite décrire le fonctionnement de l'additionneur selon l'invention.

Soit I le courant imposé dans chaque paire différentielle P1, P2, P3 du premier étage de l'additionneur. Les résistances R1, R2, R3 de la première branche et les résistances R4, R5, R6 de la seconde branche ont la même valeur R.

Selon l'état binaire des bits A, B, C le courant dans chacune des branches pourra prendre les valeurs 0, I, 2.I, 3.I. Supposons d'une façon arbitraire pour rendre plus facile l'explication du fonctionnement que la tension d'alimentation V est égale à 10.R.I, ce qui permet de calculer les valeurs des tensions, exprimées en nombre de fois R.I, apparaissant au niveaux des noeuds A1, A2, A3 et B1, B2, B3 en fonction des états logiques pris par les bits A, B, C.

Afin de ne pas avoir recours à des seuils de comparaison, ont effectue des comparaisons différentielles croisées autrement dit on compare A1 avec B3, A2 avec B2 et A3 avec B1. Ces comparaisons sont réalisées par le second étage de l'additionneur tel qu'il a été décrit précédemment.

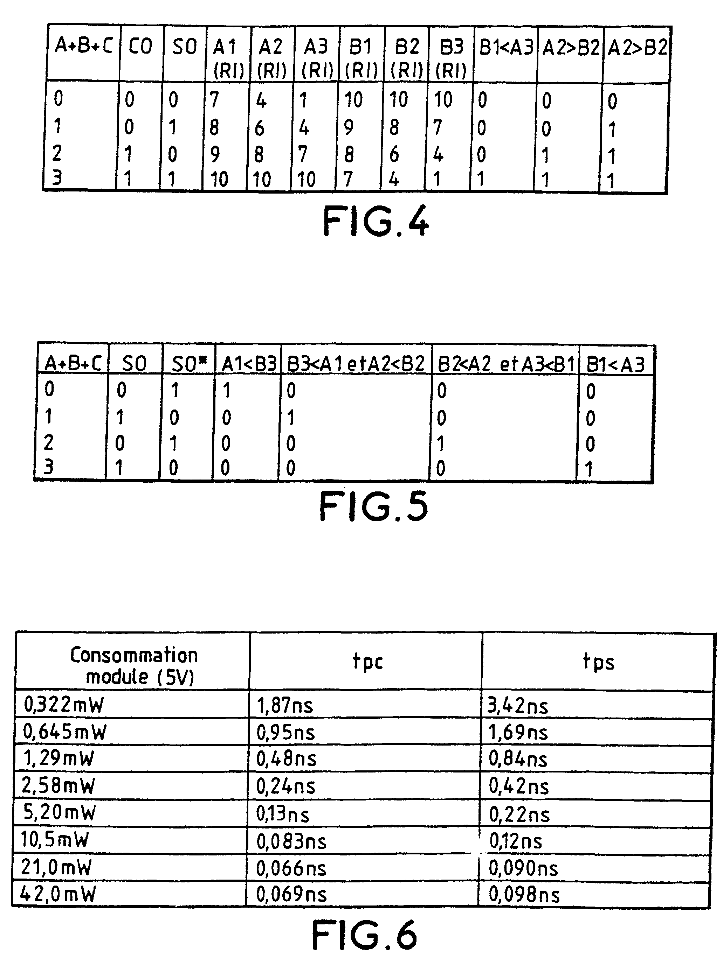

Le tableau de la figure 4, dont le trois premières colonnes en partant de la gauche rappellent la table de vérité de l'additionneur, montrent en fonction de la sommes des trois bits d'entrée A+B+C, les tensions aux différents noeud A1, A2, A3 et B1, B2, B3 des deux branches du premier étage de l'additionneur ainsi que l'états des comparaison (B1<A3), (A2>B2) et (A2>B2) à partir de ces tensions. Les valeurs des tensions aux différents noeuds sont présentées dans le tableau de la figure 4 sous la forme d'un nombre de fois R.I.

On constate que la colonne (A2>B2) correspond à la sortie CO souhaitée. On dispose donc de la sortie CO en une seule couche électronique, le temps de propagation des suiveurs T10 et T11 étant négligeable.

Par ailleurs les trois dernières colonnes du tableau de la figure 4 représentant les états des comparaison, montrent que l'on a un code thermométrique, les « 1 » remplaçant progressivement les « 0 » de colonne en colonne, ce qui permet de créer la fonction logique, réalisée par le deuxième étage de l'additionneur, et dont les états sont montrés sur le tableau de la figure 5.

On obtient ainsi un « 1 » (quatre dernières colonnes du tableau de la figure 5) qui se déplace de colonne en colonne en fonction de la somme des bits (A+B+C). Cette fonction est un index mobile analogue à celle qui existe dans un convertisseur analogique numérique de type « flash ». L'index mobile sert à sélectionner une entrée de mémoire morte dont la sortie donne la valeur numérique attendue.

Dans le cas de l'additionneur de la figure 3, la sortie CO étant déjà obtenue au niveau du premier étage de l'additionneur, il ne reste qu'à décoder la sortie somme SO.

La sortie somme SO s'obtient en faisant le « ou » câblé des colonnes (B3<A1 et A2<B2) et (B1<A3), le « ou » câblé des deux colonnes restantes (B2<A2 et A3<B1) et (A1<B3) permettant d'obtenir la sortie complémentaire SO* (voir le tableau de la figure 5). Le schéma électrique résulte directement de ces constatations.

Il est à remarquer que la sortie CO peut être obtenue en faisant le « ou » câble des deux dernières colonnes du tableau de la figure 5, mais de ce fait la sortie retenue n'aurait pas été anticipée.

Il aurait été possible également d'obtenir la sortie somme SO sous forme de logique combinatoire, cependant ceci conduit à un empilement de transistors plus nombreux nécessitant l'utilisation d'une tension d'alimentation plus élevée, donc un additionneur moins performant.

Les suiveurs T10 et T11 assurent la sortance de la retenue CO et son complément CO* tout en assurant la compatibilité des niveaux avec un élément additionneur de même type.

La valeur minimale nécessaire pour l'unité de tension R.I doit permettre de commuter correctement les comparateurs réalisés par les paires différentielles de l'additionneur élémentaire. Une valeur de environ 100 millivolts est suffisante pour l'interprétation des niveaux logiques et évite de saturer l'un des transistors.

La valeur différentielle des sorties complémentaires SO et SO* est au minimum de 2.R.I, et cette tension différentielle, sortant par les transistors suiveurs T23, T24 et T26, T27 permet d'entrer directement sur des additionneurs de même type satisfaisant ainsi à la condition de chaînabilité. Par ailleurs il est « électriquement meilleur » sous faible impédance, d'entrer les niveaux des sorties complémentaires CO, CO* sur le comparateur d'index mobile (paire différentielle P5), plutôt que d'utiliser directement les niveaux des noeuds A2, B2.

Le comparateur à index mobile comporte l'avantage de ne pas nécessiter d'empiler des transistors. Il faut veiller à ce que les transistors ne saturent pas en limitant la valeur R.I utilisée en charge, tout en assurant un niveau correct en sortie différentielle. Une valeur de R.I de 150 millivolts est convenable.

La réalisation des « ou » câblés par des transistor bipolaires revient en fait à utiliser ces derniers comme des suiveurs plutôt que comme des amplificateurs, ce qui est plus rapide.

L'additionneur élémentaire chaînable selon l'invention peut fonctionner avec une tension d'alimentation minimale d'environ 2,7 volts, grâce à l'absence d'empilement de transistors, ce qui permet de limiter la dissipation de puissance.

Un additionneur élémentaire complet selon l'invention nécessite 28 transistors ce qui est inférieur au nombre de transistors nécessaires aux additionneurs en technologie CMOS ou ECL.

A tension d'alimentation donnée, il est possible de faire varier la puissance consommée en faisant varier le courant I injecté. Les résistances varient inversement au courant (produit R.I constant).

L'intérêt de faire varier la puissance est de permettre de diminuer les temps de propagation et donc d'augmenter inversement proportionnellement la fréquence de fonctionnement.

Le tableau de la figure 6 montre des résultats obtenus pour une réalisation de l'additionneur selon l'invention, dont les résistances ont les valeurs suivantes :
Branches des paires P1, P2, P3 :R1 à R6 = 320 ohms
Branches des paires P4, P5, P6 : R15 à R18 =1000 ohms
Générateurs de courant : R7, R8, R9 = 1800 ohms;
   R10, R11, R19, R20 = 5000 ohms
   R12 à R14 =3400 ohms

On peut voir sur ce tableau que le fait de multiplier par deux la consommation, divise par deux le temps de propagation. Si les courants sont fixés, la consommation est proportionnelle à la tension d'alimentation.

Le temps de propagation le plus long correspond aux cas où le résultat de la somme des bits (A+B+C) passe de 0 à 3 ou de 3 à 0, sachant que dans ces cas, l'index mobile doit se déplacer de trois positions séquentiellement.

On constate que sur une large plage de fonctionnement tps est sensiblement égal à deux fois tpc, dans tous les cas tpc est plus petit que tps.

Les autres technologies proposées dans l'état de l'art restent moins économiques et moins performantes que celle proposée par l'invention. Dans certains cas la structure ne traite que la propagation de la retenue.

La structure décrite peut être utilisée dans une variante avec une tension d'alimentation de 3 volts permettant une diminution de la consommation.

L'additionneur chaînable peut être utilisé dans toutes les applications numériques nécessitant des additions rapides, en particulier, dans des algorithmes de traitement de signal rapide en temps réel (utilisation dans la réalisation de filtres à réponse impulsionnelle).

## Revendications

1. Additionneur chaînable recevant trois bits A, B, C pour fournir deux sorties sommes complémentaires (SO,SO*), et deux sorties retenues complémentaires (CO,CO*) comprenant :
- un premier étage ayant trois paires différentielles P1, P2, P3 recevant chacune un bit respectif A, B, C et son complément A*, B*, C*, les trois paires ayant des branches de sortie communes et étant alimentées chacune par un courant identique I, ledit additionneur étant **caractérisé en ce que** lesdites branches de sortie comprennent chacune trois résistances R1, R2, R3 et R4, R5, R6 en série connectées à un potentiel de référence (M), ces résistances définissant trois noeuds intermédiaires A1, A2, A3 dans une première branche et B1, B2, B3 dans une deuxième branche, lesdits noeuds intermédiaires étant formés par les points de connexion entre lesdites résistances et les sorties des paires différentielles, lesdites sorties retenues étant prises sur les noeuds A2 et B2,
- un deuxième étage comprenant trois autres paires différentielles P4, P5, P6 dont les entrées sont reliées aux noeuds A1 et B3 pour la paire P4, A2 et B2 pour la paire P5 et A3 et B1 pour la paire P6, les paires P4 et P6 ayant chacune une branche commune avec la paire P5 et une branche non commune, les sorties sommes de l'étage additionneur étant constituées chacune par la combinaison, selon une fonction « ou », des états logiques apparaissant respectivement sur la branche non commune de l'une des paires P4 et P6 et sur la branche commune de l'autre.

2. Additionneur chaînable selon la revendication 1, **caractérisé en ce qu'**il est alimenté par un potentiel V par rapport à un potentiel de référence représenté par une masse (M) de l'additionneur et **en ce que** chaque paire P1, P2, P3 du premier étage de l'additionneur est constituée de deux transistors, T1 et T2 pour la paire P1, T3 et T4 pour la paire P2, T5 et T6 pour la paire P3, les bases des transistors de chaque paire P1, P2, P3 recevant respectivement le bit A, B, C pour l'un des transistors de chaque paire et son complément A*, B*, C* pour l'autre transistor, les émetteurs reliés entre eux de chaque paire différentielle du premier étage, étant connectés respectivement aux collecteurs de transistors T7,T8 et T9 fonctionnant en générateurs de courant, imposant le courant I dans chaque paire différentielle, ces transistors T7, T8 et T9 étant connectés respectivement par leurs émetteurs au potentiel V par l'intermédiaire de résistances R7, R8 et R9, et par leurs bases à un potentiel de polarisation Vp, les collecteurs des transistors attaqués par les bits complémentaires A*, B*, C* étant connectés entre eux à une extrémité de la première branche comportant les trois résistances R1, R2 et R3 en série, l'autre extrémité de la première branche étant relié à la masse (M) de l'additionneur, les collecteurs des transistors attaqués par les bits A, B, C étant connectés entre eux à une extrémité de la seconde branche comportant les trois autres résistances R4, R5 et R6 en série, l'autre extrémité de la branche étant relié à la masse (M) de l'additionneur, les trois résistances R1, R2 et R3 de la première branche connectées en série, définissant les trois noeuds intermédiaires, le noeud A1, au point de connexion des résistances R1 et R2, le noeud A2 au point de connexion des résistances R2 et R3, et le noeud A3 au point de connexion de la résistance R3 et les collecteurs des transistors T1, T3 et T5, attaqués par les bits complémentaires A*, B*, C* et dans la seconde branche, les trois autres résistances R4, R5 et R6 connectées en série, définissant trois autres noeuds intermédiaires, le noeud B1 au point de connexion des résistances R4 et R5, le noeud B2 au point de connexion des résistances R5 et R6, et le noeud B3 au point de connexion de la résistance R6 et les collecteurs des transistors T2, T4 et T6 attaqués par les bits A, B, C.

3. Additionneur chaînable selon la revendication 2, **caractérisé en ce que** les sorties retenues (CO,CO*) sont prises sur les noeuds A2 et B2 à travers les jonctions base émetteur d'un transistor suiveur T10 pour la sortie retenue (CO) et d'un autre transistor suiveur T11 pour la sortie retenue complémentaire (CO*), l'un et l'autre transistors suiveurs (T10, T11) étant reliés par leurs collecteurs à la masse (M), et par leurs émetteurs respectivement aux collecteurs de transistors T12 et T13 montés en générateurs de courant, ces transistors T12 et T13 étant reliés par leurs émetteurs au potentiel négatif V, respectivement par l'intermédiaire des résistances R10 et R11, leurs bases étant connectées au potentiel de polarisation Vp.

4. Additionneur chaînable selon l'une des revendications 2 ou 3, **caractérisé en ce que** les trois autres paires différentielles P4, P5, P6 du deuxième étage de l'additionneur sont reliées au noeuds A1, A2, A3 et B1, B2, B3 du premier étage à fin de constituer les sorties sommes complémentaires (SO,SO*), la paire P4 comportant deux transistor T14 et T15, dont les bases sont respectivement reliées aux noeuds A1 et B3, la paire P5 comportant deux transistors T16 et T17, dont les bases sont respectivement reliées aux noeuds A2 et B2 à travers les jonctions base émetteur des transistors suiveurs T10 et T11, la paire P6 comportant deux transistors T18 etT19, dont les bases sont reliées respectivement aux noeuds A3 et B1, les émetteurs reliés entre eux de chaque paire différentielle P4, P5, P6 du deuxième étage étant connectées respectivement aux collecteurs de transistors T20,T21 et T22 fonctionnant en générateurs de courant, imposant un même courant dans chacune des paires différentielles P4, P5, P6, ces transistors T20,T21 et T22 étant connectés par leurs émetteurs au potentiel V, respectivement par l'intermédiaire de résistances de dégénérescence R12, R13 et R14, et par leurs bases au potentiel de polarisation Vp, le transistor T14 de la branche non commune de la paire P4 se trouvant connecté par son collecteur à la masse (M) à travers une résistance R15, les collecteurs des transistors T15,T16 de la branche commune des paires P4 et P5 étant reliés entre eux et étant reliés à la masse (M) par l'intermédiaire d'une résistance de charge commune R16 et d'une façon symétrique, les collecteurs des transistors T17 et T18 de la branche commune des paires différentielles P5 et P6 étant reliés entre eux et étant reliés à la masse (M) par l'intermédiaire d'une résistance de charge commune R17, le transistor T19 de la branche non commune de la paire différentielle P6, se trouvant connecté par son collecteur à la masse (M) à travers une résistance R18.

5. Additionneur chaînable selon la revendication 4, **caractérisé en ce que** pour la sortie SO on combine selon une fonction « ou » l'état logique présent sur les collecteurs des transistors T15, T16 de la branche commune à P4 et P5 et l'état logique présent sur le collecteur du transistor T19 de la branche non commune de P6, et symétriquement pour la sortie SO* on combine les états logiques présents sur les collecteurs des transistors T14 et de T17, T18, et **en ce que** pour la sortie SO*, on utilise des transistors T23 et T24 dont les collecteurs sont reliés à la masse (M) et les émetteurs reliés entre eux et au collecteur d'un transistor T25 monté en générateur de courant, ce transistor T25 étant relié par son émetteur au potentiel V par l'intermédiaire d'une résistance R19, sa base étant reliée au potentiel de polarisation Vp, la base du transistor T24 étant reliée au collecteur du transistor T14 de la branche non commune de la paire P4, la base du transistor T23 étant reliée aux collecteurs des transistors T17, T18 de la branche commune des paires P5 et P6, et **en ce que** pour la sortie SO, on utilise des transistors T26 et T27 dont les collecteurs sont reliés à la masse (M) et les émetteurs reliés entre eux et au collecteur d'un transistor T28 monté en générateur de courant, ce transistor T28 étant relié par son émetteur au potentiel V par l'intermédiaire d'une résistance R20, et par sa base au potentiel de polarisation Vp, la base du transistor T26 étant reliée au collecteur du transistor T19 de la branche non commune de la paire P6, la base du transistor T27 étant reliée aux collecteurs des transistors T15, T16 de la branche commune des paires P4 et P5.

6. Additionneur chaînable selon l'une des revendications 1 à 5, **caractérisé en ce qu'**il est réalisé à partir de transistors de type NPN, le potentiel V étant négatif par rapport à la masse (M) de l'additionneur.

## Claims

1. Chainable adder receiving three bits A, B, C to give two complementary sum outputs (SO, SO*) and two complementary carry outputs (CO, CO*) comprising:
- a first stage having three differential pairs P1, P2, P3 each receiving a respective bit A, B, C and its complement A*, B*, C*, the three pairs having common output arms and being each powered by an identical current I, the said adder being **characterized in that** the said output arms each comprise three resistors R1, R2, R3 and R4, R5, R6 in series connected to a reference potential (M), these resistors defining three intermediate nodes A1, A2, A3 in a first arm and B1, B2, B3 in a second arm, the said intermediate nodes being formed by the points of connection between the said resistors and the outputs of the differential pairs, the said carry outputs being taken at the nodes A2 and B2,
- a second stage comprising three other differential pairs P4, P5, P6 whose inputs are connected to the nodes A1 and B3 for the pair P4, A2 and B2 for the pair P5 and A3 and B1 for the pair P6, the pairs P4 and P6 each having a common arm with the pair P5 and an arm that is not common, the sum outputs of the adder stage being each constituted by the combination, according to an "or" function, of the logic states appearing respectively on the non-common arm of one of the pairs P4 and P6 and on the common arm of the other pair.

2. Chainable adder according to Claim 1, **characterized in that** it is powered by a potential V with respect to a reference potential represented by a ground (M) of the adder and **in that** each pair P1, P2, P3 of the first stage of the adder is constituted by two transistors T1 and T2 for the pair P1, T3 and T4 for the pair P2, T5 and T6 for the pair P3, the bases of the transistors of each pair P1, P2, P3 respectively receiving the bit A, B, C for one of the transistors of each pair and its complement A*, B*, C* for the other transistor, the emitters that are connected to one another of each differential pair of the first stage being respectively connected to the collectors of transistors T7, T8 and T9 working as current generators, imposing the current I in each differential pair, these transistors T7, T8 and T9 being connected respectively by their emitters to the potential V by means of the resistors R7, R8 and R9, and by their bases to a bias potential Vp, the collectors of the transistors fed with the complementary bits A*, B*, C* being connected to one another at one end of the first arm comprising the three resistors R1, R2 and R3 in series, the other end of the first arm being connected to the ground (M) of the adder, the collectors of the transistors fed with the bits A, B, C being mutually connected to one end of the second arm comprising the other three resistors R4, R5 and R6 in series, the other end of the arm being connected to the ground (M) of the adder, the three resistors R1, R2, and R3, which are series-connected, of the first arm defining three intermediate nodes, the node A1 at the connection point of the resistors R1 and R2, the node A2 at the connection point of the resistors R2 and R3, and the node A3 at the connection point of the resistor R3 and the collectors of the transistors T1, T3 and T5, fed with the complementary bits A*, B*, C* and, in the second arm, the other three resistors R4, R5 and R6 series-connected, defining three other intermediate nodes, the node B1 at the connection point of the resistors R4 and R5, the node B2 at the connection point of the resistors R5 and R6, and the node B3 at the connection point of the resistor R6 and the collectors of the transistors T2, T4 and T6 fed with the bits A, B, C.

3. Chainable adder according to Claim 2, **characterized in that** the carry outputs (CO, CO*) are taken at the nodes A2 and B2 through the base/emitter junctions of a follower transistor T10 for the carry output (CO) and another follower transistor T11 for the complementary carry output (CO*), either one or the other of the follower transistors (T10, T11) being connected by their collectors to the ground (M), and by their emitters respectively to the collectors of transistors T12 and T13 mounted as current generators, these transistors T12 and T13 being connected by their emitters to the negative potential V, respectively by means of the resistors R10 and R11, their bases being connected to the bias potential Vp.

4. Chainable adder according to one of Claims 2 or 3, **characterized in that** the other three differential pairs P4, P5, P6 of the second stage of the adder are connected to the nodes A1, A2, A3 and B1, B2, B3 of the first stage in order to constitute the complementary sum outputs (SO, SO*), the pair P4 comprising two transistors T14 and T15, whose bases are respectively connected to the nodes A1 and B3, the pair P5 comprising two transistors T16 and T17, whose bases are respectively connected to the nodes A2 and B2 through the base/emitter junctions of the follower transistors T10 and T11, the pair P6 comprising two transistors T18 and T19, whose bases are respectively connected to the nodes A3 and B1, the mutually connected emitters of each differential pair P4, P5, P6 of the second stage being connected respectively to the collectors of transistors T20, T21 and T22 working as current generators, imposing a current that is the same in each of the differential pairs P4, P5 and P6, these transistors T20, T21 and T22 being connected by their emitters to the potential V, respectively by means of degeneracy resistors R12, R13 and R14, and being connected by their bases to the bias potential Vp, the transistor T14 of the non-common arm of the pair P4 being connected by its collector to the ground (M) through a resistor R15, the collectors of the transistors T15 and T16 of the common arm of the pairs P4 and P5 being connected to one another and being connected to the ground (M) by means of a common load resistor R16 and, symmetrically, the collectors of the transistors T17 and T18 of the common arm of the differential pairs P5 and P6 being connected together and being connected to the ground (M) by means of a common load resistor R17, the transistor T19 of the non-common arm of the differential pair P6 being connected by its collector to the ground (M) through a resistor R18.

5. Chainable adder according to Claim 4 **characterized in that**, for the output SO a combination is made, according to an "or" function, of the logic state present on the collectors of the transistors T15, T16 of the arm common to P4 and P5 and the logic state present on the collector of the transistor T19 of the non-common arm of P6 and, symmetrically, for the output SO*, a combination is made of the logic states present on the collectors of the transistors T14 and of T17, T18 and **in that**, for the output SO*, transistors T23 and T24 are used, whose collectors are connected to the ground (M) and whose emitters are connected to one another and to the collector of a transistor T25 mounted as a current generator, this transistor T25 being connected by its emitter to the potential V by means of a resistor R19, its base being connected to the bias potential Vp, the base of the transistor T24 being connected to the collector of the transistor T14 of the non-common arm of the pair P4, the base of the transistor T23 being connected to the collectors of the transistors T17, T18 of the common arm of the pairs P5 and P6, and **in that**, for the output SO, transistors T26 and T27 are used whose collectors are connected to the ground (M) and whose emitters are connected to one another and to the collector of a transistor T28 mounted as a current generator, the transistor T28 being connected by its emitter to the potential V by means of a resistor R20, and by its base to the bias potential Vp, the base of the transistor T26 being connected to the collector of the transistor T19 of the non-common arm of the pair P6, the base of the transistor T27 being connected to the collectors of the transistors T15 and T16 of the common arm of the pairs P4 and P5.

6. Chainable adder according to one of Claims 1 to 5, **characterized in that** it is made out of NPN type transistors, the potential V being negative with respect to the ground (M) of the adder.

## Patentansprüche

1. Verkettbarer Addierer, der drei Bits A, B, C empfängt, um zwei komplementäre Summenausgänge (SO, SO*) und zwei komplementäre Übertragausgänge (CO, CO*) zu liefern, mit:
- einer ersten Stufe, die drei differentielle Paare P1, P2, P3 besitzt, die jeweils ein entsprechendes Bit A, B, C und sein Komplement A*, B*, C* empfangen, wobei die drei Paare gemeinsame Ausgangszweige besitzen und jeweils mit dem gleichen Strom I versorgt werden, wobei der Addierer **dadurch gekennzeichnet ist, daß** die Ausgangszweige jeweils drei Widerstände R1, R2, R3 und R4, R5, R6 in Reihe umfassen, die am Referenzpotential (M) geschaltet sind, wobei diese Widerstände drei Zwischenknoten A1, A2, A3 in einem ersten Zweig und B1, B2, B3 in einem zweiten Zweig definieren, wobei die Zwischenknoten durch die Verbindungspunkte zwischen den Widerständen und den Ausgängen der differentiellen Paare gebildet sind, wobei die Übertragausgänge an den Knoten A2 und B2 abgegriffen werden,
- einer zweiten Stufe, die drei weitere differentielle Paare P4, P5, P6 umfaßt, deren Eingänge mit den Knoten A1 und B3 für das Paar P4, A2 und B2 für das Paar P5 und A3 und B1 für das Paar P6 verbunden sind, wobei die Paare P4 und P6 jeweils einen gemeinsamen Zweig mit dem Paar P5 und einen nicht gemeinsamen Zweig besitzen, wobei die Summenausgänge der Addiererstufe jeweils durch die Kombination gemäß einer "Oder"-Funktion der logischen Zustände, die am nicht gemeinsamen Zweig eines der Paare P4 und P6 bzw. am gemeinsamen Zweig des anderen auftreten, gebildet sind.

2. Verkettbarer Addierer nach Anspruch 1, **dadurch gekennzeichnet, daß** er mit einem Potential V in bezug auf ein durch eine Masse (M) des Addierers repräsentiertes Referenzpotential versorgt wird und daß jedes Paar P1, P2, P3 der ersten Stufe des Addierers aus zwei Transistoren T1 und T2 für das Paar P1, T3 und T4 für das Paar P2, T5 und T6 für das Paar P3 gebildet ist, wobei die Basen der Transistoren jedes Paars P1, P2, P3 das Bit A, B bzw. C für einen der Transistoren jedes Paars und sein Komplement A*, B* bzw. C* für den jeweils anderen Transistor empfangen, wobei die miteinander verbundenen Emitter jedes differentiellen Paars der ersten Stufe mit den Kollektoren von Transistoren T7, T8 bzw. T9 verbunden sind, die als Stromgeneratoren arbeiten und in jedes differentielle Paar den Strom I eingeben, wobei diese Transistoren T7, T8 und T9 mit ihren Emittern über Widerstände R7, R8 und R9 mit dem Potential V und mit ihren Basen mit einem Vorspannungspotential Vp verbunden sind, wobei die Kollektoren der Transistoren, in die die komplementären Bits A*, B*, C* eingegeben werden, untereinander an mit einem Ende des ersten Zweigs verbunden sind, der die drei in Reihe geschalteten Widerstände R1, R2 und R3 enthält, wobei das andere Ende des ersten Zweigs mit der Masse (M) des Addierers verbunden ist, wobei die Kollektoren der Transistoren, in.die die Bits A, B, C eingegeben werden, untereinander an einem Ende des zweiten Zweigs verbunden sind, der die drei weiteren in Reihe geschalteten Widerstände R4, R5 und R6 enthält, wobei das andere Ende des Zweigs mit der Masse (M) des Addierers verbunden ist, wobei die drei Widerstände R1, R2 und R3 des ersten Zweigs, die in Reihe geschaltet sind, die drei Zwischenknoten definieren, den Knoten A1 am Verbindungspunkt der Widerstände R1 und R2, den Knoten A2 am Verbindungspunkt der Widerstände R2 und R3 und den Knoten A3 am Verbindungspunkt des Widerstandes R3 mit den Kollektoren der Transistoren T1, T3 und T5, in die die komplementären Bits A*, B*, C* eingegeben werden, und wobei im zweiten Zweig die drei anderen Widerstände R4, R5 und R6, die in Reihe geschaltet sind, drei weitere Zwischenknoten definieren, den Knoten B1 am Verbindungspunkt der Widerstände R4 und R5, den Knoten B2 am Verbindungspunkt der Widerstände R5 und R6 und den Knoten B3 am Verbindungspunkt des Widerstandes R6 mit den Kollektoren der Transistoren T2, T4 und T6, in die die Bits A, B, C eingegeben werden.

3. Verkettbarer Addierer nach Anspruch 2, **dadurch gekennzeichnet, daß** die Übertragausgänge (CO, CO*) an den Knoten A2 und B2 über die Basis-Emitter-Übergänge eines Folgetransistors T10 für den Übertragausgang (CO) und eines weiteren Folgetransistors T11 für den komplementären Übertragausgang (CO*) abgegriffen werden, wobei der eine und der andere Folgertransistor (T10, T11) mit ihren Kollektoren mit Masse (M) verbunden sind und mit ihren Emittern mit den Kollektoren von Transistoren T12 bzw. T13 verbunden sind, die als Stromgeneratoren geschaltet sind, wobei diese Transistoren T12 und T13 mit ihren Emittern über Widerstände R10 bzw. R11 mit dem negativen Potential V verbunden sind, während ihre Basen mit dem Vorspannungspotential Vp verbunden sind.

4. Verkettbarer Addierer nach einem der Ansprüche 2 oder 3, **dadurch gekennzeichnet, daß** die drei anderen differentiellen Paare P4, P5, P6 der zweiten Stufe des Addierers mit den Knoten A1, A2, A3 und B1, B2, B3 der ersten Stufe verbunden sind, um die komplementären Summenausgänge (SO, SO*) zu bilden, wobei das Paar P4 zwei Transistoren T14 und T15 enthält, deren Basen mit den Knoten A1 bzw. B3 verbunden sind, wobei das Paar P5 zwei Transistoren T16 und T17 enthält, deren Basen über die Basis-Emitter-Übergänge der Folgertransistoren T10 und T11 mit den Knoten A2 bzw. B2 verbunden sind, wobei das Paar P6 zwei Transistoren T18 und T19 enthält, deren Basen mit den Knoten A3 bzw. B 1 verbunden sind, wobei die miteinander verbundenen Emitter jedes differentiellen Paars P4, P5, P6 der zweiten Stufe mit den Kollektoren von Transistoren T20, T21 bzw. T22 verbunden sind, die als Stromgeneratoren arbeiten und in jedes differentielle Paar P4, P5, P6 denselben Strom eingeben, wobei diese Transistoren T20, T21 und T22 mit ihren Emittern mit dem Potential V über Entartungswiderstände R12, R13 bzw. R14 verbunden sind und mit ihren Basen mit dem Vorspannungspotential Vp verbunden sind, wobei der Transistor T14 des nicht gemeinsamen Zweigs des Paars P4 mit seinem Kollektor über einen Widerstand R15 mit Masse (M) verbunden ist, wobei die Kollektoren der Transistoren T15, T16 des gemeinsamen Zweigs der Paare P4 und P5 in symmetrischer Weise miteinander und über einen gemeinsamen Lastwiderstand (R16) mit Masse (M) verbunden sind, wobei die Kollektoren der Transistoren T17 und T18 des gemeinsamen Zweigs der differentiellen Paare P5 und P6 über einen gemeinsamen Lastwiderstand R17 miteinander und mit der Masse (M) verbunden sind und wobei der Transistor T19 des nicht gemeinsamen Zweigs des differentiellen Paars P6 mit seinem Kollektor über einen Widerstand R18 mit Masse (M) verbunden ist.

5. Verkettbarer Addierer nach Anspruch 4, **dadurch gekennzeichnet, daß** für den Ausgang SO der an den Kollektoren der Transistoren T15, T16 des gemeinsamen Zweigs von P4 und P5 anliegende logische Zustand und der am Kollektor des Transistors T19 des nicht gemeinsamen Zweigs von P6 anliegende logische Zustand gemäß einer "Oder"-Funktion kombiniert werden, daß für den Ausgang SO* in symmetrischer Weise die an den Kollektoren der Transistoren T14 und T17, T18 anliegenden logischen Zustände kombiniert werden und daß für den Ausgang SO* die Transistoren T23 und T24 verwendet werden, deren Kollektoren mit der Masse (M) verbunden sind und deren Emitter miteinander und mit dem Kollektor eines als Stromgenerator geschalteten Transistors T25 verbunden sind, wobei dieser Transistor T25 mit seinem Emitter über einen Widerstand R19 mit dem Potential V verbunden ist, wobei seine Basis mit dem Vorspannungspotential Vp verbunden ist, wobei die Basis des Transistors T24 mit dem Kollektor des Transistors T14 des nicht gemeinsamen Zweigs des Paars P4 verbunden ist und wobei die Basis des Transistors T23. mit den Kollektoren der Transistoren T17, T18 des gemeinsamen Zweigs der Paare P5 und P6 verbunden ist, und daß für den Ausgang SO die Transistoren T26 und T27 verwendet werden, deren Kollektoren mit der Masse (M) verbunden sind und deren Emitter miteinander und mit dem Kollektor eines als Stromgenerator geschalteten Transistors T28 verbunden sind, wobei dieser Transistor T28 mit seinem Emitter über einen Widerstand R20 mit dem Potential V verbunden ist und mit seiner Basis mit dem Vorspannungspotential Vp verbunden ist, wobei die Basis des Transistors T26 mit dem Kollektor des Transistors T19 des nicht gemeinsamen Zweigs des Paars P6 verbunden ist und wobei die Basis des Transistors T27 mit den Kollektoren der Transistoren T15, T16 des gemeinsamen Zweigs der Paare P4 und P5 verbunden ist.

6. Verkettbarer Addierer nach einem der Ansprüche 1 bis 5, **dadurch gekennzeichnet, daß** er mittels Transistoren des NPN-Typs verwirklicht ist, wobei das Potential V in bezug auf die Masse (M) des Addierers negativ ist.
